Europäisches Patentamt

European Patent Office

Office européen des brevets

(19)

(11) Numéro de publication: **0 470 914 B1**

(12) **FASCICULE DE BREVET EUROPEEN**

(45) Date de publication de fascicule du brevet: **26.04.95**  (51) Int. Cl.6: **E04B  1/94**, E04C 2/04

(21) Numéro de dépôt: **91420278.3**

(22) Date de dépôt: **25.07.91**

(54) **Composition pour coeur de plaque de plâtre.**

(30) Priorité: **08.08.90 FR 9010314**

(43) Date de publication de la demande:
**12.02.92 Bulletin  92/07**

(45) Mention de la délivrance du brevet:
**26.04.95 Bulletin  95/17**

(84) Etats contractants désignés:
**AT BE CH DE DK ES FR GB GR IT LI LU NL SE**

(56) Documents cités:
**EP-A- 0 258 064
GB-A- 2 022 503
US-A- 3 616 173
US-A- 4 687 694**

(73) Titulaire: **PLATRES LAFARGE
5 Avenue de l'Egalité
F-84800 Isle-Sur Sorgue (FR)**

(72) Inventeur: **Verdera, Jean-Michel
Lotissment Chantebise 1,örue S. Mallarm
F-26700 Pierrelatte (FR)**
Inventeur: **Leclercq, Claude
46, rue le Cours,
Saint-Didier
F-84210 Pernes les Fontaines (FR)**

(74) Mandataire: **Guerre, Dominique
Cabinet Germain et Maureau
20 Boulevard Eugène Deruelle
BP 3011
F-69392 Lyon Cédex 03 (FR)**

**Description**

La présente invention concerne une plaque de plâtre avec un coeur préparé notamment avec du plâtre dans la forme de sulfate de calcium hydratable et des fibres de verre et possédant un comportement au feu amélioré.

L'invention trouve un champ d'application particulièrement intéressant comme élément de construction des cloisons, des plafonds ou des gaines.

Pour constituer une protection contre l'incendie qui soit efficace et conforme aux exigences règlementaires, la plaque de plâtre, et en particulier le coeur de la plaque doit présenter un comportement au feu satisfaisant tant en matière de réaction au feu que de résistance au feu.

Par réaction au feu, on entend l'aptitude du matériau à propager ou non l'incendie, qui dépend de l'aptitude du matériau à s'enflammer et à brûler. Le démarrage d'un feu sera d'autant plus difficile que le matériau sera moins combustible et moins inflammable.

Par résistance au feu, on entend l'aptitude du matériau à créer ou non une barrière au feu, qui dépend essentiellement de la stabilité dimensionnelle du matériau, de sa tenue mécanique à température élevée et de son caractère d'isolation thermique. Pour être résistant au feu, un matériau doit présenter à la fois ces trois propriétés, sinon la propagation rapide de l'incendie ne peut être évitée.

En d'autres termes, quand le feu a démarré dans une pièce d'un bâtiment, il faut éviter :

- que le bâtiment ne s'écroule : les matériaux exposés au feu doivent donc, à ces températures élevées, posséder à la fois une stabilité dimensionnelle et une résistance mécanique élevées ;
- que l'incendie ne se propage dans les autres locaux : le caractère d'isolation thermique des matériaux exposés au feu doit être élevé.

Egalement, les plaques de plâtre doivent satisfaire aux exigences de manutention et de pose habituelles dans la construction. Notamment les plaques de plâtre doivent être légères (faible densité) sinon elles sont fragiles et leur transport est coûteux. Egalement, il est demandé que leur mise en oeuvre soit facilitée, notamment en leur formant des bords amincis.

En outre, les plaques de plâtre doivent assurer aux constructions réalisées, les caractéristiques d'usage qui leur sont propres telles que, pour ne citer que les plus courantes, la résistance mécanique (aux chocs notamment), la résistance à l'humidité et des caractéristiques esthétiques (dont l'invisibilité des joints, l'absence de fléchissement différé pour les plaques destinées à la construction des plafonds).

Pour finir, le coût des plaques de plâtre constituant une protection contre l'incendie doit être modéré : notamment, leur production ne doit pas nécessiter d'investissements importants et les matières premières qui entrent dans leur composition ne doivent pas être coûteuses.

On trouve sur le marché des plaques de plâtre qui satisfont les exigences règlementaires en matière de protection contre l'incendie. Mais aucune de ces plaques ne remplit à la fois l'ensemble des caractéristiques qui viennent d'être rappelées ci-dessus, à savoir donc, la résistance et la réaction au feu, la facilité de manutention et de pose, les caractéristiques d'usage et un faible coût de revient.

Dans le domaine de la protection contre l'incendie, les plaques de plâtre comprenant des fibres de verre sont largement utilisées. Notamment sont connues des plaques de plâtre dans lesquelles sont incorporées des feuilles de fibres de verre, généralement non tissées. Dans ces conditions, seul le plâtre est apparent. Ces plaques de plâtre sont obtenues par coulée de pâte à base de plâtre et d'eau suivie d'un laminage par pressage entre des rouleaux.

Ce procédé de fabrication a pour inconvénient d'être peu productif : en effet, en raison du contact direct du plâtre avec l'outil de fabrication, il se produit un encrassement de ce dernier qui oblige à travailler à des vitesses de production faibles. De plus, les plaques obtenues par ce procédé sont denses, donc fragiles : leur manutention exige des précautions particulières.

Sont également connues des plaques de faible densité (de l'ordre de 0,77 g/cm3) dont le coeur est préparé avec du plâtre, dans la forme de sulfate de calcium hydratable, des fibres de verre, de la perlite et de la vermiculite non expansée. Ces plaques comportent, sur chaque face, une couche de renforcement à base de fibres de verre. Grâce à la présence de perlite et de vermiculite non expansée, cette plaque présente des qualités d'isolation thermique.

Mais la variation dimensionnelle (retrait) de la plaque sous l'effet de la chaleur est seulement retardée et son amplitude n'est pas modifiée. En conséquence, la résistance au feu de ces plaques est limitée par le retrait et les phénomènes physiques qui en résultent provoquent une fissuration profonde. Par ailleurs, on se heurte à des difficultés d'ordre technologique lors de la fabrication de ces plaques en raison du caractère abrasif de la perlite.

Le brevet US 3 616 173 décrit une plaque de plâtre cartonnée résistante au feu, de faible densité (comprise entre 0,64 et 0,8 g/cm3) dont le coeur est préparé avec (en % en poids rapporté au poids total

EP 0 470 914 B1

des ingrédients secs) :
- du plâtre ($CaSO_4$, 1/2 $H_2O$) : de l'ordre de 71,5 à 99 %, de préférence de l'ordre de 91 à 97 % ;
- des fibres de verre : de l'ordre de 0,1 à 1 %, de préférence de 0,2 à 0,5 % ;
- de l'argile, de la silice colloïdale, de l'oxyde d'aluminium colloïdal, ou un mélange de deux au moins de ces composés : de l'ordre de 0,5 à 20 %, de préférence de l'ordre de 2 à 5 % ;
- éventuellement, de la vermiculite non expansée pour compenser le retrait du gypse porté à température élevée : de l'ordre de 0 à 7,5 %, de préférence de l'ordre de 1 à 3,5 %.

Dans ce brevet, il est précisé que les oxydes de silice et d'aluminium, sous forme de poudre sèche, sont difficiles à disperser et de plus onéreux. Pour cette raison notamment, ce brevet préconise l'utilisation d'argiles.

La plaque de plâtre selon ce brevet, présente un retrait à haute température qui est assez faible mais sa tenue au feu (dans les conditions de l'essai indiqué ci-après) est limitée et n'excède pas 51,5 minutes.

En outre, quand elle est soumise à l'action d'une source rayonnante :
- il se produit une émission de fumée et de flamme du fait de la combustion du carton, ce qui risque de favoriser la propagation d'un incendie ;
- si le coeur de cette plaque renferme de la vermiculite non expansée, la structure de la plaque peut se fissurer du fait de l'expansion de cet ingrédient.

Selon le brevet européen N° 258 064, une plaque de plâtre, résistante au feu et à tenue mécanique améliorée est obtenue avec une composition de coeur préparé avec du sulfate de calcium semi-hydraté (plâtre), des fibres de verre, un agent apte à retarder le feu qui est un composé du bore, et un agent apportant de la résistance au feu qui est choisi parmi des composés du silicium ou de l'aluminium. A titre d'exemple d'agent apportant la résistance au feu, ce brevet cite l'hydroxyde d'aluminium. Pour améliorer encore la résistance mécanique et la résistance au feu, ce brevet préconise que le plâtre soit broyé par martelage après calcination. Le principal inconvénient de ces plaques réside dans leur coût élevé dû à la présence de matières premières coûteuses (composés du bore) et à l'usage de traitement spécifique de ces matières premières.

Un but de la présente invention est de proposer une plaque de plâtre qui a un comportement au feu amélioré comparativement aux plaques de plâtre précitées. Pour ce faire, on a recherché une plaque de plâtre présentant l'ensemble des propriétés rappelées ci-dessus, tant en matière de réaction au feu que de résistance au feu, et indispensables à l'obtention d'une protection anti-feu plus efficace.

Un autre but de l'invention est une plaque de plâtre qui soit peu coûteuse, et par conséquent qui ne nécessite pas, pour sa fabrication, un appareillage particulier ni un procédé spécifique.

Un autre but de l'invention est une plaque de plâtre qui soit légère et qui puisse être utilisée conformément aux habitudes dans le domaine de la construction.

Un autre but de l'invention est une plaque de plâtre qui possède des caractéristiques d'usage satisfaisantes.

Pour atteindre ces différents buts, la présente invention propose une plaque de plâtre constituant une protection efficace contre l'incendie, dont les faces sont recouvertes d'un matériau de renfort à base de fils minéraux, en particulier fils réfractaires, de fibres minérales, en particulier fibres réfractaires, ou une combinaison de tels fils et telles fibres, et dont le coeur est préparé avec les ingrédients suivants, exprimés en % en poids par rapport au mélange total sec :
- 55 % à 94 % de plâtre, dans la forme de sulfate de calcium hydratable ;
- 0,1 % à 5 % de fibres minérales, en particulier fibres réfractaires,
- 2 % à 25 % de silice,
- 1 % à 15 % de talc, de mica ou d'une combinaison de talc et de mica.

La plaque de plâtre selon l'invention présente les avantages suivants :
- Le coeur peut être formé aisément sous la forme d'une pâte fluide qui est ensuite transformée avantageusement en continu, en plaque de plâtre, dans des installations classiques utilisées pour ce type de fabrication.
- Grâce à la présence d'un matériau de renfort extérieur, les bords de la plaque de plâtre peuvent être avantageusement formés, en particulier amincis, lors de la fabrication de la plaque.
- Elle constitue une protection efficace contre l'incendie. Ainsi, une propriété avantageuse des plaques selon l'invention, d'épaisseur d'environ 12,5mm et de densité d'environ 0,84g/$cm^3$ (soit d'environ 10,5 kg/$m^2$) réside dans le fait qu'elles garantissent une tenue au feu supérieure à 54 min. Les conditions opératoires détaillées de cet essai sont indiquées ci-après.
- Grâce à leur bonne stabilité dimensionnelle, les plaques selon l'invention conservent après l'essai de tenue au feu un bon aspect général sans fissure profonde et présentent une tenue mécanique.

3

- Une autre propriété particulièrement avantageuse des plaques de plâtre selon l'invention est révélée par les résultats des essais de réaction au feu : quand ces plaques sont soumises à l'action d'une source rayonnante dans des conditions définies (durant 20 min), susceptibles de provoquer l'inflammation des gaz dégagés et une propagation de la combustion, on n'a pas observé d'inflammation et la détérioration de ces plaques n'est que superficielle. A l'issue de cet essai, les plaques de plâtre selon l'invention sont donc encore en mesure d'arrêter la propagation d'un incendie.

- Grâce à sa légèreté, et à son aptitude à être ouvragée (découpée, clouée, vissée, etc...), elle est très facile à mettre en place. Avantageusement, elle comporte des bords amincis, avec lesquels on peut réaliser des joints fiables entre les plaques, à l'aide d'enduits à joint pour plaque de plâtre, par exemple du type de ceux utilisés pour les plaques enrobées dans du carton, et de préférence, des enduits à joints résistants au feu. Egalement, les possibilités de finition des éléments de construction réalisés avec des plaques selon l'invention sont variées et sont notamment la peinture, le papier peint, etc...

- Elle possède les caractéristiques d'usage exigées dans le domaine de la construction : telles que la résistance mécanique aux chocs lourds, la résistance à l'humidité, et l'absence de fluage en présence d'humidité ou sous son propre poids lorsqu'elle est montée en plafond.

- Pour finir, étant donné qu'elle peut être fabriquée selon un procédé simple et bien connu dans le domaine des plaques de plâtre et qu'en outre la combinaison des matières premières qui la constituent sont assez bon marché, la plaque de plâtre selon l'invention présente l'avantage d'être d'un coût de revient modéré.

Par plâtre au sens de la présente invention, on entend un sulfate de calcium hydratable, d'origine naturelle ou synthétique, qui est en majorité constitué de sulfate de calcium semi-hydraté et comprend éventuellement une faible proportion de sulfate de calcium anhydre.

Avantageusement, on utilise un plâtre convenant à la préparation des plaques de plâtre classiques : il n'est en effet pas nécessaire de modifier les caractéristiques physiques ou chimiques de ce plâtre pour préparer des plaques conformes à l'invention.

Le plâtre est préparé de façon connue en soi, par broyage suivi d'une cuisson du sulfate de calcium dihydraté.

Comme précité, le coeur de la plaque de plâtre selon l'invention est préparé avec 55 à 94 % en poids de plâtre dans la forme de sulfate de calcium hydratable. En deçà de 55 % en poids de plâtre, le coeur ne présente généralement pas une résistance mécanique satisfaisante. Au-delà de 94 % en poids de plâtre, la résistance mécanique de la plaque selon l'invention, quand elle est soumise à l'action d'une flamme, est généralement médiocre : ceci provient des variations dimensionnelles de la plaque qui sont dans ce cas généralement trop importantes.

Les fibres minérales sont de préférence en verre. Les fibres de verres choisies pour préparer la plaque de plâtre selon l'invention peuvent être aussi bien courtes (de l'ordre de 3 à 6 mm en moyenne) ou bien longues (de l'ordre de 10 à 24 mm en moyenne) ou de dimensions intermédiaires. De préférence, on utilise un mélange de fibres de verre tel que le rapport en poids de fibres de verre courtes sur fibres de verre longues soit compris entre 30/70 et 70/30, et de préférence encore, compris entre 40/60 et 60/40.

La silice se présente sous la forme d'un produit fin, de préférence de granulométrie moyenne inférieure à 100 microns. La silice convenant à l'invention peut être cristallisée ou amorphe : elle est choisie, par exemple, parmi le quartz, la calcédoine, la tridymite ou la cristobalite.

Néanmoins, on préfère utiliser les silices cristallisées, car les plaques de plâtre qui en comprennent présentent une meilleure tenue mécanique quand elles sont exposées à un incendie. On pense que ceci résulte de l'existence d'une propriété caractéristique attribuée aux silices cristallisées, appelée par l'homme de l'art "point quartz" à 570° C environ. Ce point quartz correspond à une transition cristalline de la silice cristallisée à cette température qui s'accompagne d'un saut dilatométrique susceptible de compenser le retrait de déshydratation de la matrice minérale. Ce phénomène est donc favorable à la tenue mécanique de la plaque de plâtre. De préférence encore, on utilise le quartz avec lequel on a observé les meilleures performances en stabilité dimensionnelle et en résistance mécanique.

Le talc et le mica sont des produits très fins bien connus. Ils se caractérisent par une structure feuilletée. En outre, lorsqu'ils sont soumis à des températures élevées, le talc et le mica convenant à l'invention ne s'expansent pas. En combinaison avec les constituants du coeur de la plaque, à savoir le plâtre, les fibres minérales et la silice, une forte diminution de la variation dimensionnelle des plaques de plâtre exposées à une flamme, a été obtenue.

Egalement, on a mesuré des résistances au feu élevées avec un rapport de silice sur talc (et/ou mica) compris entre 1 et 4. De préférence, ce rapport est compris entre 1,5 et 4.

Le matériau de renfort, qui recouvre les faces de la plaque de plâtre, peut se présenter sous la forme d'un voile, d'un tissu ou d'un mât de fibres minérales qui est de préférence combiné à une nappe de fils continus enchevêtrés, de grilles de fils minéraux ou sous d'autres formes. De préférence, les fils et les fibres constituant le matériau de renfort sont en verre.

Les meilleures performances ont été obtenues avec une plaque particulièrement avantageuse dont le coeur est préparé avec les ingrédients suivants, exprimés en % en poids par rapport au mélange total sec) :
- 65,5 % à 85 % de plâtre, dans la forme de sulfate de calcium hydratable,
- 0,5 % à 1,5 % de libres minérales,
- 4,5 % à 22 % de silice,
- 1,5 % à 10 % de talc, de mica, ou d'une combinaison de talc et de mica.

Une première catégorie particulièrement avantageuse des compositions de coeur selon l'invention est constituée par celles qui renferment (en % en poids) :
- 55 % à 94 % de plâtre, dans la forme de sulfate de calcium hydratable, de préférence 65,5 à 85 %,
- 0,1 % à 5 % de fibres minérales, en particulier fibres réfractaires, de préférence 0,5 % à 1,5 %,
- 2 % à 25 % de silice, de préférence 4,5 % à 22 %,
- 1 % à 15 % de talc, de mica, ou d'une combinaison de talc et de mica, de préférence 1,5 % à 10 %,
et comprennent en outre de l'hydroxyde d'aluminium.

De préférence, le coeur de la plaque de plâtre est préparé avec 0,1 % à 15 % en poids d'hydroxyde d'aluminium. Grâce à l'ajout d'hydroxyde d'aluminium, les performances de la plaque de plâtre sont considérablement augmentées : ainsi, les variations dimensionnelles (retraits) de la plaque exposée à une source de chaleur sont faibles et la tenue au feu est garantie pendant 1 heure ou plus (dans les conditions de l'essai indiquées ci-après). Les meilleures performances de résistances au feu ont été obtenues avec cette formule de coeur.

En outre, la formule de coeur, à base d'hydroxyde d'aluminium notamment, répond aux objectifs visés par l'invention et précités ci-avant.

L'hydroxyde d'aluminium convenant à la présente invention se présente sous la forme d'une poudre. De préférence, on choisit une poudre dont les particules ont une dimension moyenne de l'ordre de 10 microns ou inférieure.

Une seconde catégorie particulièrement avantageuse des compositions de coeur selon l'invention est constituée par celles qui renferment (en % en poids) :
- 55 % à 94 % de plâtre, dans la forme de sulfate de calcium hydratable, de préférence 65,5 à 85 %,
- 0,1 % à 5 % de fibres minérales, en particulier fibres réfractaires, de préférence 0,5 % à 1,5 %,
- 2 % à 25 % de silice, de préférence 4,5 % à 22 %,
- 1 % à 15 % de talc, de mica, ou d'une combinaison de talc et de mica, de préférence 1,5 % à 10 %,
et comprennent en outre de la vermiculite expansée.

De préférence, le coeur de la plaque de plâtre est préparé avec 1 % à 20 % en poids de vermiculite expansée.

Grâce à l'ajout de vermiculite expansée, les performances de la plaque de plâtre sont améliorées sur le plan de la tenue au feu : ainsi, en suivant le mode opératoire de l'essai décrit ci-après, on trouve une tenue au feu supérieure à 54 minutes, qui atteint dans certains cas plus d'une heure.

Egalement, cette plaque présente une résistance mécanique élevée à haute température.

En outre, la formule de coeur, à base notamment de vermiculite expansée, répond aux objectifs visés par l'invention et précités ci-avant. La vermiculite expansée convenant à l'invention se présente sous la forme d'une poudre, dont les particules ont une dimension moyenne de l'ordre de 100 microns à 3 mm. En deçà de 100 microns, elle est trop fine pour remplir sa fonction d'isolant.

Une troisième catégorie particulièrement avantageuse des compositions de coeur selon l'invention est constituée par celles qui renferment (en % en poids) :
- 55 % à 94 % de plâtre, dans la forme de sulfate de calcium hydratable, de préférence 65,5 à 85 %,
- 0,1 % à 5 % de fibres minérales, en particulier fibres réfractaires, de préférence 0,5 % à 1,5 %,
- 2 % à 25 % de silice, de préférence 4,5 % à 22 %,
- 1 % à 15 % de talc, de mica, ou d'une combinaison de talc et de mica, de préférence 1,5 % à 10 %,
et comprennent en outre de l' hydroxyde d'aluminium et de la vermiculite expansée.

Grâce à cette troisième formule, l'amplitude de la variation dimensionnelle de la plaque exposée à une source de chaleur (test de la tenue au feu) est faible et sa résistance mécanique à haute température est élevée.

Sans sortir du cadre de l'invention, on peut introduire, dans le mélange destiné à la préparation du coeur des plaques de plâtre conformes à l'invention, à titre secondaire, des adjuvants utilisés de façon usuelle, en combinaison avec les différents constituants du coeur, pour faciliter leur mise en oeuvre ou leur conférer des propriétés particulières supplémentaires.

Par exemple, on peut ajouter un agent moussant à raison de 0,01 à 0,1 % en poids de cet agent pur par rapport au mélange sec constitutif du coeur, ceci afin d'alléger encore les plaques de plâtre. On a en effet observé qu'avec des taux d'allègement n'excédant pas 40 % en poids, les performances atteintes par les plaques de plâtre selon l'invention, et en particulier la résistance au feu, ne sont pas affectées.

Egalement, on peut éventuellement ajouter dans la composition de base du coeur un ou plusieurs accélérateurs de prise, ceci afin d'accélérer la prise du plâtre et par conséquent d'améliorer la productivité.

Eventuellement encore, on peut ajouter un agent hydrofugeant pour minimiser encore la reprise d'eau.

Une caractéristique avantageuse des plaques de plâtre selon l'invention réside dans leur densité qui est généralement comprise entre 0,7 et 0,96 g/cm$^3$, et de préférence entre 0,8 et 0,9.

Les dimensions de ces plaques peuvent être très variées et sont fonction de l'usage qui en est fait.

Les plaques de plâtre destinées à la fabrication de cloisons peuvent atteindre 5 m en longueur et 1,20 m en largeur et leur épaisseur peut varier entre 6 et 35 mm.

Comme précisé précédemment, les plaques de plâtre selon l'invention sont avantageusement préparées grâce au procédé classique de préparation des plaques de plâtre à savoir donc, un procédé, de préférence continu, comprenant essentiellement les étapes suivantes :

- Préparation d'une pâte par mélange des différents constituants du coeur de la plaque avec de l'eau, dans un mélangeur.
- Dépôt de cette pâte sur le matériau de renfort, suivi du formage et de l'enrobage de la face supérieure de la pâte à l'aide d'un second matériau de renfort.
- Avantageusement, formage des bords de la plaque ainsi obtenue par moulage de la plaque fraîche sur des bandes profilées. Généralement, ce formage consiste à amincir les bords de la plaque.
- La prise du plâtre se fait sur la ligne alors que le long ruban de plaque de plâtre chemine sur un tapis roulant.
- en fin de ligne, le ruban est découpé en longueurs déterminées et les plaques obtenues sont séchées.
- Après ce traitement, les plaques de plâtre sont prêtes à l'emploi.

Les exemples qui vont suivre sont donnés à titre illustratif et non limitatif de l'invention.

Les conditions opératoires des principaux tests auxquels les plaques de plâtre exemplifiées ont été soumises sont données ci-après.

## Densité

La densité de la plaque de plâtre est déterminée en divisant le poids d'un échantillon de plaque par son volume.

Egalement, afin de comparer les plaques exemplifiées, on donnera pour chacune d'entre elles leur épaisseur et leur poids au m$^2$ qui est simplement obtenu en multipliant la densité par l'épaisseur.

## Résistance à la flexion

Cet essai consiste à imposer à une plaque de plâtre, dont les deux extrémités reposent chacune sur un support, une pression centrale à l'aide d'un couteau s'appuyant sur la médiane transversale de la plaque.

Pour cet essai, les supports de la plaque sont espacés de 350 mm et la largeur des échantillons est de 300 mm.

On mesure la charge (P) nécessaire pour provoquer la rupture (en daNewton).

La contrainte permet de comparer des échantillons d'épaisseurs différentes. Elle est exprimée en bar et est calculée à l'aide de la formule suivante :

$$= \frac{3}{2} \frac{P \, l}{b \, h^2}$$

P : Charge de rupture
l : longueur entre les appuis
b : largeur de l'échantillon
h : épaisseur de l'échantillon

**Résistance au feu**

*1) Tenue au feu*

Cet essai permet d'évaluer les caractéristiques d'isolation thermique de la plaque de plâtre.

Cet essai a été réalisé dans des conditions expérimentales similaires à celles utilisées dans les essais officiels, à savoir :

. deux plaques de plâtre à faces carrées de 30 cm de côté, de composition et de structure identique, sont assemblées de sorte qu'elles soient parallèles et séparées par un interstice d'épaisseur égale à 45 mm. Cet ensemble constitue la porte du four. Les mesures de température sont faites sur les deux faces extrêmes de ce montage. La mesure faite sur la face exposée permet de vérifier que la courbe de montée en température, représentée sur la figure, est bien suivie.

La courbe de montée en température utilisée correspond à celle recommandée par la norme N° ISO 834 1975 F. L'équation de la courbe de montée en température est la suivante :

$$T - T_o = 345 \log_{10} (8t + 1)$$

t : temps en minutes

$T_o$ : température ambiante à t = 0

T : Température du four

La deuxième mesure de température sur la face non exposée donne l'élévation de la température de la plaque extérieuré. On considère que la limite d'isolation thermique est atteinte lorsque la température de la face externe de la plaque non exposée atteint 115 °C. Au delà, on considère que la plaque de plâtre ne constitue plus un coupe-feu efficace. On relève le temps mis pour atteindre cette température et on le désigne par durée du coupe-feu.

A la différence des essais officiels qui considèrent que la température limite d'efficacité est de 140°C, une température inférieure de 115°C a été retenue. En effet, on a observé en comparant les résultats des essais officiels avec ceux des essais selon le mode opératoire précité que les courbes de montée en température de la face externe de la plaque non exposée, à échelle égale, sont dans ces deux cas superposables si on positionne le 140°C de la courbe des essais officiels sur le 115°C de la courbe de l'essai décrit ci-dessus.

*2) Variation dimensionnelle à haute température*

Ces essais ont été réalisés sur des éprouvettes ayant la forme de parallélépipède, de longueur égale à 25 mm et de côté carré de surface égale à 25 mm².

Le mode opératoire de cet essai est le suivant :

- les éprouvettes sont placées dans un four dont la vitesse de montée en température est programmée à 300°C/heure.
- Pendant cette montée en température, on mesure en continu :
  . la température à l'intérieur du four, en fonction du temps ;
  . la variation dimensionnelle de l'échantillon.
- On peut alors obtenir des courbes de variation dimensionnelle en fonction de la température.

**Réaction au feu :**

Cet essai a été réalisé conformément à la norme NF P92 501 d'octobre 1975.

# Exemple 1 (comparatif)

Cet exemple a pour objet une plaque de plâtre commercialisée par la société British Plasterboard sous la dénomination commerciale STUCAL BF 10.

Cette plaque de plâtre est à base de plâtre et de fibres de verre sous la forme d'un voile non tissé noyé dans le plâtre. Par conséquent, seul le plâtre est apparent.

Les caractéristiques physiques de la plaque étudiée sont les suivantes :

| - densité | 1,02 |
|-----------|------|
| - épaisseur | 10,2 |
| - poids | 10,4 |

Quand cette plaque est soumise au test de tenue au feu décrit ci-dessus, on trouve une durée de coupe-feu de 49,5 minutes.

Après refroidissement, la plaque présente de nombreuses et profondes fissures.

| Retrait en mm/m à différentes températures (en C°) | | | | | | |
|---------|---------|---------|---------|---------|---------|---------|
| 122°C | 220°C | 310°C | 438°C | 558°C | 638°C | 714°C |
| 4,33 | 6,66 | 20,06 | 39,32 | 47,05 | 47,74 | 91 66 |

# Exemple 2 (comparatif)

Cet exemple a pour objet une plaque de plâtre commercialisée par la société KNAUF sous la dénomination commerciale FIREBOARD BA 15 .

Le coeur de cette plaque de plâtre est à base de plâtre (78 à 80 % en poids), de fibres de verre (0,15 % de fibres de verre longues d'environ 12 mm), de perlite et de vermiculite non expansée. Un parement mat de renfort à base de verre et comprenant une grille est prévu sur chacune de ses faces.

Les caractéristiques physiques de cette plaque sont les suivantes :

| - densité | 0,77 g/cm$^3$ |
|-----------|---------------|
| - épaisseur | 15 mm |
| - poids | 11,55 kg/m$^2$ |

**Variation dimensionnelle à température élevée**

Dans les conditions opératoires précitées, on observe:
- une première phase sans retrait jusqu'à 100°C,
- une zone, jusqu'à 280°C, où le retrait évolue de 2,5‰ à 4‰,
- une phase de retrait, jusqu'à 352°C,
- une zone, jusqu'à 676°C, où le retrait évolue de 1,2% à 3%,
- une zone de retrait tel qu'à 752°C, le retrait est égal à 7,3% et qu'à 788°C, on constate un retrait égal à 12,8%.

# Exemple 3 ( Comparatif)

On charge dans un mélangeur (en % en poids par rapport au mélange total sec) :
- 86 % de plâtre synthétique (issu d'un gypse de désulfuration),
- 1 % de fibres de verre de dénomination commerciale VETROTEX EX 14 300 5112 et comprenant pour moitié des fibres de 3 mm et pour l'autre moitié des fibres de 12 mm,
- 9 % de quartz commercialisé par SIFRACO sous la dénomination C400,
- 4 % de kaolin
- et la quantité d'eau nécessaire pour obtenir une pâte de viscosité compatible avec le procédé classique de préparation des plaques de plâtre : le taux de gâchage, correspondant au rapport en poids d'eau sur la quantité totale de solide, est dans cet exemple choisi égal à 0,62.

La pâte obtenue est ensuite coulée sur un matériau de renfort : il s'agit d'un matériau de renfort, constitué d'un mat de fibres de verre associé à une grille de verre, commercialisé sous la dénomination "complexe schuller", de référence FH 0.50 x 1 B10. Un second matériau de renfort, de même composition, vient par dessus recouvrir la bande de plâtre en formation.

Après la prise, la bande de plâtre est découpée puis séchée.

Les plaques de plâtre préparées possèdent les caractéristiques suivantes :

| - densité | 0,9 g/cm$^3$ |
|---|---|
| - épaisseur | 12,35 mm |
| - poids | 11,2 kg/m$^2$ |

Quand cette plaque est soumise au test de tenue au feu décrit ci-dessus, on trouve une durée du coupe-feu égale à 51,5 minutes.

Le test de variation dimensionnelle, réalisé dans les conditions précitées, avec une éprouvette préparée avec les constituants du coeur de la plaque décrite dans cet exemple, dans les mêmes proportions, donne les résultats indiqués dans le tableau II suivant :

| Retrait en mm/m à différentes températures (en C°) | | | | | | |
|---|---|---|---|---|---|---|
| 122°C | 220°C | 310°C | 438°C | 558°C | 638°C | 714°C |
| 2,73 | 2,86 | 6,86 | 16,92 | 26,65 | 37,74 | 50,46 |

A l'issue de l'essai, la plaque comporte des fissures dont certaines qui sont profondes et donc nuisibles à la protection anti-feu.

## Exemples 4 à 8

La composition du coeur des plaques est reportée dans le tableau III ci-dessous. Les conditions opératoires utilisées pour préparer ces plaques sont similaires à celles indiquées dans l'exemple 3, les différences étant précisées dans le tableau III.

**TABLEAU III**

| Numéro de l'essai | 4 | 5 | 6 | 7 | 8 |
|---|---|---|---|---|---|
| Composition du coeur (en % en poids par rapport au mélange total sec) | | | | | |
| - Plâtre (1) | 79,0 | 79,5 | 79,5 | 74,0 | 86,0 |
| - Fibres de verre (2) | 1,0 | 0,5 | 0,5 | 1,0 | 1,0 |
| - Quartz (3) | 15,0 | 10 | 10 | 19 | 9,75 |
| - Talc (4) | 5,0 | 10 | 10 | 6,0 | 3,25 |
| - Mousse : | | | | | |
| . agent moussant (5) (en ml/kg de mélange sec) | 2,5 | 0 | 3,0 | 2,5 | 2,5 |
| . eau (en g/ml d'agent moussant) | 24,0 | 0 | 23,8 | 24,0 | 24,0 |
| . volume (en ml/kg de mélange sec) | 240,0 | 0 | 632 | 240,0 | 240,0 |
| Conditions opératoires | | | | | |
| Eau/Solides (en poids) | 0,685 | 0,71 | 0,71 | 0,71 | 0,70 |

9

| Caractéristiques physiques de la plaque obtenue | | | | | |
|---|---|---|---|---|---|
| Poids sec (kg/m2) | 10,94 | 12,5 | 11,34 | 11,45 | 10,52 |
| Densité (g/cm3) | 0,87 | 1,00 | 0,91 | 0,92 | 0,84 |
| Epaisseur (mm) | 12,47 | 12,48 | 12,36 | 12,47 | 12,47 |
| Résistance en flexion dans le sens longitudinales (bar) | 94 | 101,4 | 92 | 86 | 99 |

(1) Il s'agit d'un plâtre synthétique, c'est à dire issu d'un gypse de désulfuration (Le gypse dit de désulfuration est obtenu par oxydation du soufre, suivie d'une neutralisation en milieu aqueux à l'aide, par exemple, de chaux). Si on utilise du plâtre d'origine naturelle, les performances à froid ou à température élevée atteintes par ces plaques sont similaires à celles atteintes avec des plaques préparées avec du plâtre synthétique. On constate juste des retraits plus faibles pour les plaques préparées avec du plâtre d'origine naturelle : ce phénomène peut s'expliquer par la pureté du plâtre naturel qui est inférieure à celle d'un plâtre synthétique.

(2) 50 % des fibres ont une longueur de 3 mm, 50 % ont une longueur de 12 mm, pour les essais 4, 7 et 8. Pour les essais 5, et 6, les fibres de verre ont une longueur de 6 mm.

(3) Il s'agit du quartz commercialisé par SIFRACO sous la dénomination C 400. Si on remplace partiellement ou totalement le quartz par une autre silice

cristallisée, telle que la cristobalite, la plaque obtenue présente à la fois un bon comportement à froid et à température élevée. En particulier, la variation dimensionnelle à température élevée est faible : avec des plaques comprenant 10 % en poids de quartz, le retrait est stable jusqu'à 920°C et est égal à 1,5 % ou inférieur. Avec 10 % en poids de cristobalite, on obtient des plaques présentant un retrait stabilisé jusqu'à 900°C qui est égal à 1,6 %.

(4) Il s'agit du talc commercialisé par TALC DE LUZENAC sous la dénomination C2.

(5) Il s'agit de l'agent moussant de dénomination commerciale SIMULSOL à 5 % dans l'eau, qui est un sulfate de lauryle de sodium. D'autres agents moussants ont été testés, notamment d'autres agents anioniques : les résultats obtenus sont similaires à ceux exemplifiés.

**Les résultats des essais 4 à 8 sont les suivants :**

**Réaction au feu :** Dans les conditions opératoires précitées, rigoureusement identiques à celles du Laboratoire National d'essais pour les plaques des exemples 4 à 8, nous n'avons observé aucune émission de fumée ni de flamme.

**Résistance au feu :**

**Essai n° 4**

- Tenue au feu :

La durée du coupe feu, dans les conditions précitées est de 60 minutes.

**Essai N° 5**

- Tenue au feu

La durée du coupe feu est de 54 minutes. Après l'essai, la plaque présente un bel aspect général ainsi qu'une bonne tenue mécanique.

**Essai n° 6**

- Tenue au feu

La durée du coupe-feu est de 58 minutes. Après l'essai, la plaque présente un bel aspect général ainsi qu'une bonne tenue mécanique.

**Essai n° 7**

- Tenue au feu

Dans les conditions précitées, elle est de 59 minutes. Après l'essai, l'échantillon présente une bonne tenue mécanique et est exempt de fissures.

**Essai n° 8**

- Tenue au feu

Dans les conditions précitées, nous avons mesuré une durée du coupe feu égale à 63 minutes. Après l'essai, on constate la présence de microfissures sur les plaques et leur tenue mécanique est un peu inférieure à celle des plaques décrites dans les exemples 4 à 7.

**Variation dimensionnelle à haute température.**

Dans les conditions précitées, des éprouvettes préparées à partir des compositions décrites dans les essais 4 à 8 sont soumises au test de variation dimensionnelle à haute température. Les résultats (retraits constatés) sont portés dans le tableau IV ci-dessous en mm/m.

| N° de l'essai<br><br>Température (en °C) | 4 | 5 | 6 | 7 | 8 |
|---|---|---|---|---|---|
| 122 | 0,19 | 0,10 | 0,35 | 0,19 | 0,68 |
| 220 | 0,55 | 0,56 | 0,83 | 0,39 | 0,78 |
| 310 | 1,79 | 2,24 | 2,63 | 1,60 | 2,75 |
| 438 | 9,57 | 11,10 | 10,44 | 7,23 | 9,40 |
| 558 | 13,73 | 14,97 | 14,97 | 10,65 | 18,59 |
| 638 | 18,83 | 19,60 | 20,96 | 15,14 | 21,83 |
| 714 | 24,03 | 24,33 | 27,33 | 19,81 | 27,26 |

**Exemples 9 à 13**

- Influence de l'ajout d'hydroxyde d'aluminium

La composition du coeur des plaques est reportée dans le tableau IV ci-dessous. Les conditions opératoires utilisées pour préparer les plaques et les éprouvettes nécessaires au test sont similaires à celles indiquées dans l'exemple 3 : seuls diffèrent les paramètres indiqués dans le tableau V. On notera qu'aucun problème n'est apparu lors de la mise en oeuvre d'es plaques. En outre, on observe une très bonne reproductibilité des résultats : pour une faible variation du poids surfacique, on obtient des plaques constituant des protections anti-feu de performances sensiblement identiques.

**Tableau V**

| Numéro de l'essai | 9 | 10 | 11 | 12 | 13 |
|---|---|---|---|---|---|
| Composition du coeur (en % en poids par rapport au mélange total sec) | | | | | |
| - Plâtre | 60 | 70 | 76 | 76 | 76 |
| - Fibres de verre (1) | 5 | 1 | 1 | 1 | 1 |
| - Quartz (2) | 14 | 6 | 9 | 9 | 9 |
| - Talc (3) | 8 | 4 | 4 | 4 | 4 |
| - Hydroxyde d'aluminium (4) | 13 | 19 | 10 | 10 | 10 |
| - Mousse : | | | | | |
| . agent moussant (5) (en ml/kg de mélange sec) | 4,17 | 3,83 | 3,83 | 4 | 3,83 |
| . eau en g/ml d'agent moussant | 24 | 24 | 24 | 24 | 24 |
| . volume (en ml/kg de mélange sec) | 667 | 517 | 542 | 542 | 542 |
| Conditions opératoires | | | | | |
| Eau/Solides (en poids) | 0,76 | 0,60 | 0,63 | 0,64 | 0,63 |
| Caractéristiques physiques de la plaque obtenue | | | | | |
| Poids sec (kg/m2) | 10,22 | 11,02 | 11,02 | 10,75 | 10,70 |
| Densité (g/cm3) | 0,80 | 0,89 | 0,90 | 0,89 | 0,875 |
| Epaisseur (mm) | 13,3 | 12,42 | 12,44 | 12,34 | 12,37 |
| Résistance en flexion dans le sens longitudinales (en bar) | / | 103 | 100 | 97 | 94 |

(1) 50 % des fibres ont une longueur moyenne de 3 mm, 50 % des fibres ont une longueur moyenne de 12 mm.

(2) Le quartz utilisé a pour dénomination C400 et est commercialisé par la société SIFRACO.

On notera que :

- dans l'essai n° 12, le quartz a été remplacé par de la cristobalite : il s'agit de la cristobalite commercialisée par la société SIFRACO sous la dénomination M3000.

- dans l'essai n° 13, le quartz a été remplacé, pour moitié seulement, par de la cristobalite M3000.

(3) Il s'agit du talc commercialisé par la société Talc de Luzenac sous la dénomination C2.

On notera que, dans l'essai n° 11, le talc a été remplacé par du mica commercialisé par la société "Comptoir des Minéraux et matières premières", sous la dénomination MICA N 247.

(4) Il s'agit de l'hydroxyde d'aluminium commercialisé par la société OMYA sous la dénomination OM 320. Avec l'hydroxyde d'aluminium commercialisé par PECHINEY sous la dénomination SH 100, des résultats similaires ont été obtenus.

**Les résultats des essais 9 à 13 sont les suivants :**

- Réaction au feu

Dans les conditions opératoires (NF-P92-501 d'octobre 1975), rigoureusement identiques à celles du Laboratoire National d'Essais, pour les plaques des essais 9 à 13, nous n'avons observé aucune émission de flamme ni de fumée.

EP 0 470 914 B1

- **Résistance au feu**

Après les essais de tenue au feu et variation dimensionnelle à haute température, dans les conditions précitées, l'aspect général des plaques et éprouvettes testées des essais 9 à 13 est très bon. En outre, leur tenue mécanique est tout à fait correcte après ces tests.

Les autres résultats sont reportés dans le tableau VI ci dessous :

Tableau VI

| Numéro de l'essai | | 9 | 10 | 11 | 12 | 13 |
|---|---|---|---|---|---|---|
| Tenue au feu | | | | | | |
| Temps en minutes mis par la face externe de la plaque non exposée pour atteindre : | 115°C | 53,5 | 58,5 | 61,5 | 54 | 56,5 |
| | 140°C | 60,0 | 64,5 | 69,5 | 59 | 62,0 |
| Température atteinte par la face externe de la plaque non exposée après 2 heures de tests (en °C) | | 184 | 197 | 180 | 212 | 200 |
| Variation dimensionnelle (retrait) en mm/m à différentes températures dans les conditions opératoires précitées | à 122°C | 1,13 | 2,13 | 1,93 | 1,93 | 2,33 |
| | à 220°C (*) | 0,86 | 3,06 | 2,46 | 1,66 | 2,26 |
| | à 310°C | 5,66 | 17,66 | 11,26 | 14,46 | 12,10 |
| | à 438°C | 9,52 | 26,12 | 20,52 | 24,72 | 18,72 |
| | à 558°C | 16,45 | 36,65 | 31,23 | 35,45 | 27,45 |
| | à 638°C | 31,14 | 49,14 | 47,14 | 51,74 | 42,34 |
| | à 714°C | 58,46 | 66,9 | 58,86 | 74,86 | 62,86 |

* A 220°C, on atteint la fin du palier de déshydratation du gypse en anhydrite. Grâce à l'invention, à cette température, le retrait est faible, ce qui permet d'éviter l'apparition de fissures capables de conduire à un échauffement prématuré de la seconde plaque puis à une augmentation rapide de la température de la face non exposée.

## Exemples 14 et 15

Influence de l'ajout de vermiculite expansée

La composition du coeur des plaques est indiquée dans le tableau VII ci-dessous. Egalement sont indiquées dans ce tableau, les conditions opératoires utilisées pour préparer ces plaques et qui diffèrent de celles de l'exemple 3.

Aucun problème particulier n'est apparu lors de la mise en oeuvre des plaques.

15

**EP 0 470 914 B1**

Tableau VII

| Numéro de l'essai | | 14 | 15 |
|---|---|---|---|
| Composition du coeur (en % (en poids par rapport au mélange total sec) | | | |
| Plâtre | | 90 | 65 |
| Fibres de verre (1) | | 0,5 | 4 |
| Quarts (2) | | 3 | 20 |
| Talc (3) | | 1,5 | 9 |
| Vermiculite expansée (4) | | 5 | 2 |
| Mousse : | | | |
| - Agent moussant (ml/kg de mélange sec) | | 3,83 | 3,83 |
| - Eau (en ml/ml d'agent moussant) | | 24 | 24 |
| - Volume (en ml/kg de mélange sec | | 533 | 608 |
| Conditions opératoires | | | |
| Eau/solides (en poids) | | 0,63 | 0,7 |
| Caractéristiques physiques de la plaque réalisée | | | |
| . Poids surfacique (kg/m2) | | 11,16 | 11,28 |
| . Densité (g/cm3) | | 0,875 | 0,85 |
| . Epaisseur (mm) | | 12,42 | 13,65 |
| . Résistance en flexion dans le sens longitudinal (bar) | | 101 | 78 |

(1) 50 % des fibres ont une longueur moyenne de 3 mm, 50 % des fibres ont une longueur moyenne de 12 mm.
(2) Il s'agit du quartz commercialisé par la société SIFRACO sous la dénomination C400.
(3) Il s'agit du talc commercialisé par la société Talc de Luzenac sous la dénomination C2.
(4) Il s'agit de vermiculite expansée commercialisée par la société ELFI de densité égale à 0,12.

conditions précitées, l'aspect général des plaques et éprouvettes testées, correspondantes aux essais 14 et 15, est très bon. En outre, leur tenue mécanique est tout à fait correcte après ces tests. Les autres résultats sont reportés dans le tableau VIII ci-dessous :

Tableau VIII

| Numéro de l'essai | | 14 | 15 |
|---|---|---|---|
| Tenue au feu | | | |
| Temps en minutes mis par la face externe de la plaque non exposée pour atteindre : | 115 °C | 65 | 54 |
| | 140 °C | 69,5 | 60 |
| Température atteinte par la face externe de la plaque non exposée après 2 heures de test (en °C) | | 187 | 193 |
| Variation dimensionnelle (retrait) en mm/m à différentes températures dans les conditions opératoires précitées à : (en °C) | 122 | 3,33 | 1,93 |
| | 220 | 3,66 | 1,86 |
| | 310 | 10,86 | 4,86 |
| | 438 | 26,52 | 13,12 |
| | 558 | 39,45 | 19,85 |
| | 638 | 58,34 | 31,14 |
| | 714 | 77,66 | 50,06 |

16

**Exemple 16**

Dans les conditions de l'exemple 3, à la différence du taux de gâchage (rapport massique eau/solides) qui est égal à 0,65, nous avons préparé une plaque dont le coeur est à base de (en % en poids par rapport au mélange total sec) :

| | |
|---|---|
| - Plâtre | 80 |
| - Fibres de verre (50%) de longueur moyenne égale à 3 mm, l'autre moitié ayant une longueur moyenne de 12 mm) | 2 |
| - Vermiculite expansée de densité égale à 0,12 | 3 |
| - Quartz de dénomination commerciale C400 | 8 |
| - Talc de dénomination commerciale C2 | 3 |
| - Hydroxyde d'aluminium de dénomination commerciale SH 100 | 4 |

Les caractéristiques physiques de la plaque obtenue sont les suivantes :

| | |
|---|---|
| - Poids surfacique (kg/m$^2$) | 10,78 |
| - Densité (g/cm$^3$) | 0,85 |
| - Epaisseur (mm) | 12,43 |
| - Résistance en flexion dans le sens longitudinal (bar) | 98 |

Les résultats des tests sont les suivants :

- Réaction au feu

Aucune émission de flamme ni de fumée n'a été observée quand cette plaque a été placée dans la chambre de réaction au feu conformément aux conditions opératoires précitées.

- Résistance au feu

Après les essais de tenue au feu et de variation dimensionnelle à haute température, dans les conditions précitées, l'aspect général des plaques et éprouvettes testées est très bon. En outre, leur tenue mécanique est tout à fait correcte après ces tests.

Les résultats chiffrés sont les suivants :

Tenue au feu

Le temps mis par la face externe de la plaque non exposée pour atteindre 115°C est de 59 minutes, et de 65 minutes pour atteindre 140°C.

La température atteinte par la face externe de la plaque non exposée après 2 heures de test est égale à 192°C.

Variation dimensionnelle (en mm/m) à différentes températures (en °C)

| 122°C | 220°C | 310°C | 438°C | 558°C | 638°C | 714°C |
|---|---|---|---|---|---|---|
| 1,73 | 2,26 | 9,26 | 19,32 | 29,85 | 47,94 | 68,46 |

**Exemples 17 et 18**

A la différence de l'exemple 16, la composition du coeur de la plaque dans ces exemples est la suivante :

EP 0 470 914 B1

| Numéro de l'essai | 17 | 18 |
|---|---|---|
| Composition du coeur (en % en poids par rapport au mélange total sec | | |
| Plâtre | 76 | 76 |
| Fibres de verre | 1 | 1 |
| Quartz | 9 | 9 |
| Talc | 3 | 3 |
| Vermiculite expansée | 3 | 3 |
| (1) Hydroxyde d'aluminium | 8 | 8 |
| Mousse : | | |
| - Agent moussant (ml/kg de mélange sec) | 2,5 | 2,5 |
| - Eau (en ml/ml d'agent moussant) | 23,33 | 23,33 |
| - Volume (en ml/kg de mélange sec) | 633 | 633 |
| Numéro de l'essai | 17 | 18 |
| Conditions opératoires | | |
| Eau/solides (en poids) | 0,685 | 0,685 |
| Caractéristiques physiques de la plaque réalisée | | |
| . Poids surfacique (kg/m2) | 11,06 | 11,03 |
| . Densité (g/cm3) | 0,88 | 0,88 |
| . Epaisseur (mm) | 12,63 | 12,56 |
| . Résistance en flexion dans le sens longitudinal (bar) | 102 | 99 |

(1) Dans l'essai 17, il s'agit d'hydroxyde d'aluminium de dénomination commerciale MARTINAL vendu par OMYA. Dans l'essai 18, il s'agit d'hydroxyde d'aluminium commercialisé par PECHINEY sous la dénomination SH 100.

**Les résultats des tests sont les suivants**

- Réaction au feu

Les résultats sont identiques à ceux de l'exemple 16.

- Résistance au feu

Après les essais de tenue au feu et de variation dimensionnelle à haute température, dans les conditions précitées, l'aspect général des plaques et des éprouvettes testées est très bon. En outre, leur tenue mécanique est correcte.

. Tenue au feu

Le temps mis par la face externe des plaques des exemples 17 et 18 pour atteindre 115°C est égal à 65 minutes.

. Variation dimensionnelle à haute température.

Dans les conditions précitées des éprouvettes préparées à partir des compositions décrites dans les essais 17 et 18 ont été soumises au test de variation dimensionnelle à haute température. Les retraits constatés sont portés dans le tableau IX ci-dessous, en mm/m.

18

| N° de l'essai Température (en °C) | 17 | 18 |
|---|---|---|
| 122 | 0,22 | 0,19 |
| 220 | 0,87 | 0,90 |
| 310 | 4,39 | 5,23 |
| 438 | 9,33 | 10,76 |
| 558 | 17,58 | 15,76 |
| 638 | 18,65 | 22,23 |
| 714 | 24,00 | 28,12 |

**Revendications**

1. Plaque de plâtre constituant une protection efficace contre l'incendie, dont les faces sont recouvertes d'un matériau de renfort à base de fils minéraux, en particulier fils réfractaires, de fibres minérales, en particulier fibres réfractaires, ou d'une combinaison de tels fils et de telles fibres, et dont le coeur est préparé avec les ingrédients suivants, exprimés en % en poids par rapport au mélange total sec :
   - 55 à 94 % de plâtre, dans la forme de sulfate de calcium hydratable,
   - 0,1 à 5 % de fibres minérales, en particulier fibres réfractaires,
   - 2 à 25 % de silice,
   - 1 à 15 % de talc, de mica, ou d'une combinaison de talc et de mica.

2. Plaque de plâtre selon la revendication 1, caractérisée en ce que la silice choisie est cristallisée.

3. Plaque de plâtre selon la revendication 2, caractérisée en ce que comme silice, on utilise du quartz.

4. Plaque de plâtre selon une des revendications 1 à 3, caractérisée en ce que le rapport massique de silice sur le talc et/ou le mica est compris entre 1 et 4.

5. Plaque de plâtre selon la revendication 4, caractérisée en ce que le rapport massique de silice sur le talc et/ou le mica est supérieur ou égal à 1,5.

6. Plaque de plâtre selon une des revendications 1 à 5, caractérisée en ce que comme fibre minérale, on utilise des fibres de verre.

7. Plaque de plâtre selon une des revendications 1 à 6, caractérisée en ce que le coeur est préparé avec les ingrédients suivants, exprimés en % en poids par rapport au mélange total sec :
   - 65,5 à 85 % de plâtre, dans la forme de sulfate de calcium hydratable,
   - 0,5 à 1,5 % de fibres minérales, en particulier fibres réfractaires,
   - 4,5 à 22 % de silice,
   - 1,5 à 10 % de talc, de mica, ou d'une combinaison de talc et de mica.

8. Plaque de plâtre selon une des revendications 1 à 7, caractérisée en ce que le coeur comprend également de l'hydroxyde d'aluminium.

19

**9.** Plaque de plâtre selon la revendication 8, caractérisée en ce que le coeur de la plaque comprend 0,1 à 15 % en poids d'hydroxyde d'aluminium par rapport au mélange total sec constituant le coeur.

**10.** Plaque de plâtre selon l'une des revendications 1 à 7, caractérisée en ce que le coeur comprend également de la vermiculite expansée.

**11.** Plaque de plâtre selon la revendication 10, caractérisée en ce que le coeur comprend de 1 à 20 % en poids de vermiculite expansée par rapport au mélange total sec constituant le coeur.

**12.** Plaque de plâtre selon l'une des revendications 1 à 7, caractérisée en ce que le coeur de la plaque comprend en outre de l'hydroxyde d'aluminium et de la vermiculite expansée.

**Claims**

**1.** Plaster sheet constituting an effective protection against fire, whose faces are covered with a reinforcing material based on mineral threads, in particular refractory threads, mineral fibres, in particular refractory fibres, or a combination of such threads and such fibres, and whose core is prepared with the following ingredients, expressed in % by weight relative to the total dry mix:
   - 55 to 94 % of plaster, in the form of hydratable calcium sulphate,
   - 0.1 to 5 % of mineral fibres, in particular refractory fibres,
   - 2 to 25 % of silica,
   - 1 to 15 % of talc, mica or a combination of talc and mica.

**2.** Plaster sheet according to Claim 1, characterized in that the silica chosen is crystalline.

**3.** Plaster sheet according to Claim 2, characterized in that quartz is employed as silica.

**4.** Plaster sheet according to one of Claims 1 to 3, characterized in that the mass ratio of silica to talc and/or mica is between 1 and 4.

**5.** Plaster sheet according to Claim 4, characterized in that the mass ratio of silica to talc and/or mica is higher than or equal to 1.5.

**6.** Plaster sheet according to one of Claims 1 to 5, characterized in that glass fibres are employed as a mineral fibre.

**7.** Plaster sheet according to one of Claims 1 to 6, characterized in that the core is prepared with the following ingredients, expressed in % by weight relative to the total dry mix:
   - 65.5 to 85 % of plaster, in the form of hydratable calcium sulphate,
   - 0.5 to 1.5 % of mineral fibres, in particular refractory fibres,
   - 4.5 to 22 % of silica,
   - 1.5 to 10 % of talc, mica or a combination of talc and mica.

**8.** Plaster sheet according to one of Claims 1 to 7, characterized in that the core also contains aluminium hydroxide.

**9.** Plaster sheet according to Claim 8, characterized in that the core of the sheet comprises 0.1 to 15 % by weight of aluminium hydroxide relative to the total dry mix constituting the core.

**10.** Plaster sheet according to one of Claims 1 to 7, characterized in that the core also comprises expanded vermiculite.

**11.** Plaster sheet according to Claim 10, characterized in that the core comprises from 1 to 20 % by weight of expanded vermiculite relative to the total dry mix constituting the core.

**12.** Plaster sheet according to one of Claims 1 to 7, characterized in that the core of the sheet comprises in addition aluminium hydroxide and expanded vermiculite.

**Patentansprüche**

1. Gipsplatte, die einen wirksamen Brandschutz bildet, deren Seiten mit einem Verstärkungsmaterial auf Basis von anorganischen Fäden, insbesondere feuerfesten Fäden, Mineralfasern, insbesondere feuerfesten Fasern, oder einer Kombination solcher Fäden und solcher Fasern überzogen sind, und deren Kern aus folgenden Bestandteilen, ausgedrückt in Gew.-% der trockenen Gesamtmischung, hergestellt ist:
   - 55 bis 94 % Gips in Form von hydratisierbarem Calciumsulfat,
   - 0,1 bis 5 % Mineralfasern, insbesondere feuerfesten Fasern,
   - 2 bis 25 % Siliciumdioxid,
   - 1 bis 15 % Talk, Glimmer, oder eine Kombination von Talk und Glimmer.

2. Gipsplatte nach Anspruch 1, dadurch gekennzeichnet, daß das gewählte Siliciumdioxid kristallin ist.

3. Gipsplatte nach Anspruch 2, dadurch gekennzeichnet, daß als Siliciumdioxid Quarz verwendet wird.

4. Gipsplatte nach einem der Ansprüche 1 bis 3, dadurch gekennzeichnet, daß das Massenverhältnis zwischen Siliciumdioxid und Talk und/oder Glimmer zwischen 1 und 4 liegt.

5. Gipsplatte nach Anspruch 4, dadurch gekennzeichnet, daß das Massenverhältnis zwischen Siliciumdioxid und Talk und/oder Glimmer größer oder gleich 1,5 ist.

6. Gipsplatte nach einem der Ansprüche 1 bis 5, dadurch gekennzeichnet, daß als Mineralfasern Glasfasern verwendet werden.

7. Gipsplatte nach einem der Ansprüche 1 bis 6, dadurch gekennzeichnet, daß der Kern aus folgenden Bestandteilen, ausgedrückt in Gew.-% der trockenen Gesamtmischung, hergestellt ist:
   - 65,5 bis 85 % Gips in Form von hydratisierbarem Calciumsulfat,
   - 0,5 bis 1,5 % Mineralfasern, insbesondere feuerfesten Fasern,
   - 4,5 bis 22 % Siliciumdioxid,
   - 1,5 bis 10 % Talk, Glimmer oder eine Kombination von Talk und Glimmer.

8. Gipsplatte nach einem der Ansprüche 1 bis 7, dadurch gekennzeichnet, daß der Kern außerdem Aluminiumhydroxid enthält.

9. Gipsplatte nach Anspruch 8, dadurch gekennzeichnet, daß der Kern der Platte 0,1 bis 15 Gew.-% Aluminiumhydroxid bezüglich der trockenen Gesamtmischung, die den Kern bildet, enthält.

10. Gipsplatte nach einem der Ansprüche 1 bis 7, dadurch gekennzeichnet, daß der Kern außerdem expandierten Vermiculit enthält.

11. Gipsplatte nach Anspruch 10, dadurch gekennzeichnet, daß der Kern 1 bis 20 Gew.-% expandierten Vermiculit bezüglich der trockenen Gesamtmischung, die den Kern bildet, enthält.

12. Gipsplatte nach einem der Ansprüche 1 bis 7, dadurch gekennzeichnet, daß der Kern der Platte außerdem Aluminiumhydroxid und expandierten Vermiculit enthält.